# EUROPEAN PATENT APPLICATION

(11) **EP 4 818 565 A1**
(43) Date of publication of application: **07.10.2026**
(21) Application number: 25167607.8
(22) Date of filing: 01.04.2025
(51) Int. Cl.: F16L 19/06, F16L 21/04

(54) **PRESSURE ELEMENT**

(71) Applicant: Georg Fischer WAGA N.V., 8161 PA Epe (NL)
(72) Inventor: van der Molen, Arjen, 8181 PN Heerde (NL); Schreiber, Marc, 5062 HM Oisterwijk (NL); Naus, Mathieu, 7545 SR Enschede (NL)
(74) Representative: Fenner, Seraina

(57) **Abstract**

Pressure element for use in a coupling device for exerting a clamping force on a pipe, wherein the said pressure element is configured to be used as one of a series of correspondingly embodied pressure elements, wherein said pressure element as well as each pressure element of said series comprises a first pressure element segment and a second pressure element segment and wherein in use the first pressure element segment is arranged for being placed proximally and the second pressure element segment is arranged for being placed distally with respect the longitudinal axis of the pipe wherein the first pressure element segment of said pressure element as well as of each first pressure element segment is provided with at least on stop and the second pressure element segment of said pressure element as well as of each second pressure element segment is provided with at least one cooperating counter stop for limiting an extreme position of the first pressure element segment and second pressure element segment with respect to each other, wherein the stop and the counter stop of the first and second pressure segment of the same pressure element co-operate with each other.

## Description

The invention relates to a pressure element for use in a coupling device for exerting a clamping force on a pipe, wherein the said pressure element is configured to be used as one of a series of correspondingly embodied pressure elements, wherein said pressure element as well as each pressure element of said series comprises a first pressure element segment and a second pressure element segment and wherein in use the first pressure element segment is arranged for being placed proximally and the second pressure element segment is arranged for being placed distally with respect the longitudinal axis of the pipe.

EP 2 929 225A1 discloses a coupling device that securely holds a pipe by utilizing a plurality of pressure elements that work together to exert a strong clamping force and ensure a reliable connection. Each pressure element comprises two interlocking segments that are flexibly and adaptably arranged around the pipe, thereby increasing the overall strength of the connection. The pressure elements are provided with protrusions and slots that connect neighboring pressure elements and limit their mutual axial displacement.

The disadvantage of this is that the protruding projection that enters the neighboring part is usually too weak for the high forces that occur and then breaks off, which means that clamping on the pipe is no longer guaranteed.

The disadvantages of this vehicle structure

It is the object of the invention to propose a pressure element for use in a coupling device that provides a stop on the pressure element segments which allows the two pressure element segments of a pressure element to be displaced axially relative to each other and has a high degree of stability and strength.

This object is achieved according to the invention in that the first pressure element segment of said pressure element as well as of each first pressure element segment is provided with at least on stop and the second pressure element segment of said pressure element as well as of each second pressure element segment is provided with at least one cooperating counter stop for limiting an extreme position of the first pressure element segment and second pressure element segment with respect to each other, wherein the stop and the counter stop of the first and second pressure segment of the same pressure element co-operate with each other.

The inventive pressure element for use in a coupling device for exerting a clamping force on a pipe, wherein the said pressure element is configured to be used as one of a series of correspondingly embodied pressure elements which preferably form a closed ring which is then used in a coupling device for exerting the clamping force. The inventive pressure element as well as each pressure element of said series comprises a first pressure element segment and a second pressure element segment and wherein in use the first pressure element segment is arranged for being placed proximally and the second pressure element segment is arranged for being placed distally with respect the longitudinal axis of the pipe or the pipe. The first pressure element segment of said pressure element as well as of each first pressure element is provided with at least on stop and the second pressure element segment of said pressure element as well as of each second pressure element is provided with at least one cooperating counter stop for limiting an extreme position of the first part and second part with respect to each other. The stop and the counter stop of the first and second pressure segment of the same pressure element co-operate with each other. This means that the stop and the counter-stop on the first pressure element segment and second pressure element segment of the same pressure element limit the axial displacement of the pressure element in the extreme position. The extreme position is formed by the pipe in the clutch wanting to release axially from the clutch, causing a force on the gripper teeth and thus pulling the first pressure segment axially in the direction of the pressure ring. The counter stop on the second pressure segment limits the displacement of the first pressure segment by the stop resting against the counter stop.

Preferably, the fist pressure element segment and the second pressure element segment are arranged to be displaceable relative to one another along the longitudinal axis between a normal position and an extreme position.

Preferably, the second pressure element segment has a cavity on the underside in which a tongue extends, which serves as a guide along the longitudinal axis for the mutual displacement of the first and the second pressure element segment. The tongue is preferably arranged at right angles to the longitudinal axis in the center of the cavity. It is advantageous if the tongue extends along the longitudinal axis, preferably at least to the center of the cavity.

Preferably, the first pressure element segment has a recess on the upper side in which the tongue of the second pressure element segment can be moved. The tongue of the second pressure segment and the recess of the first pressure segment form a corresponding longitudinal guide. The recess is preferably arranged at right angles to the longitudinal axis in the center of the first pressure segment.

Preferably, a stop and the counter stop are arranged at the front of the tongue and the recess and are in the extreme position against each other. The counter stop is formed by the end face on the tongue against which the end wall of the recess is in the extreme position, which limits displacement. As a high force then acts on the stop and counter-stop, the stop and counter-stop must be stable so that they do not break off under high forces.

Preferably, two parallel side elements are arranged on the side of the cavity on the underside of the second pressure element segment. The side elements serve to guide the second pressure element segment longitudinally into which the top of the 1s protrudes and delimit the cavity laterally.

Advantageous a wedge is arranged at the top of the first pressure element segment and is guided through the two side elements of the second pressure element segment. This causes the wedge to protrude into the cavity on the underside of the second pressure element segment.

Preferably, a stop is arranged on the two side elements and co-operates with a counter stop arranged on the top of the first pressure element segment. The two stops are located on the first pressure element segment each to the side of the wedge in the extension of the side elements so that the counter stops arranged on the side elements correspond to the stops or the stops are in the extreme position against the counter stops. it is advantageous if the pressure elements have several stops, which results in better force distribution.

Preferably, the top of the wedge and the base of the recess are inclined at an angle α relative to the longitudinal axis, that the top of the wedge and the base of the exception are parallel.

Preferably the surface of the stop and counter-stop of the tongue and the exceptions run at an angle β to the longitudinal axis, whereby the angle β is between 35 -130°, preferably 45-90, more preferable between 80 - 90 degrees, even more preferably between 88 - 90 degrees. The angle of the surface of the stop and the counter stop with respect to the gripper teeth surface of the first part may be chosen as desired. If the angle is 90 degrees with respect to the gripper teeth surface respectively to the longitudinal axis or larger than 90 degrees, i.e. the surface of the stop are inclined in an opposite direction as the slanting surfaces of the wedges, the surface of the stop act as pure stops. If the angle is smaller than 90 degrees with respect to the gripper teeth surface, i.e. the surface of the stop are inclined in a similar direction as the slanting surfaces of the wedge, the surface of the stop function as a second ramp. The angle of the surface of the stop with respect to the gripper teeth surface is preferably larger than the angle of the slanting surfaces of the wedge with respect to the gripper teeth surface, such that it provides a relatively steep ramp for limiting the first and second part to the extreme position and providing a strong force in the direction of the pipe over the length of the surface of the stop.

Preferably, the first and second pressure element segments are one-piece plastic parts, preferably injection-molded plastic parts. As a large number of parts is required, this is the most economical way to produce them.

All possible embodiments can be freely combined with one another and the method features also apply to the device and vice versa.

An exemplary embodiment of the invention is described by way of the Figures, the invention not being restricted to only the exemplary embodiment, in which:
Figure 1 shows a three-dimensional view of a pressure element according to the invention,
Figure 2 shows a an exploded view of a pressure element according to the invention,
Figure 3 shows a plan view of a pressure element according to the invention with the marked cutting paths,
Figure 4a shows a sectional view A-A in standard position,
Figure 4b shows a sectional view A-A in extreme position,
Figure 5a shows a sectional view B-B in standard position and
Figure 5b shows a sectional view B-B in extreme position,

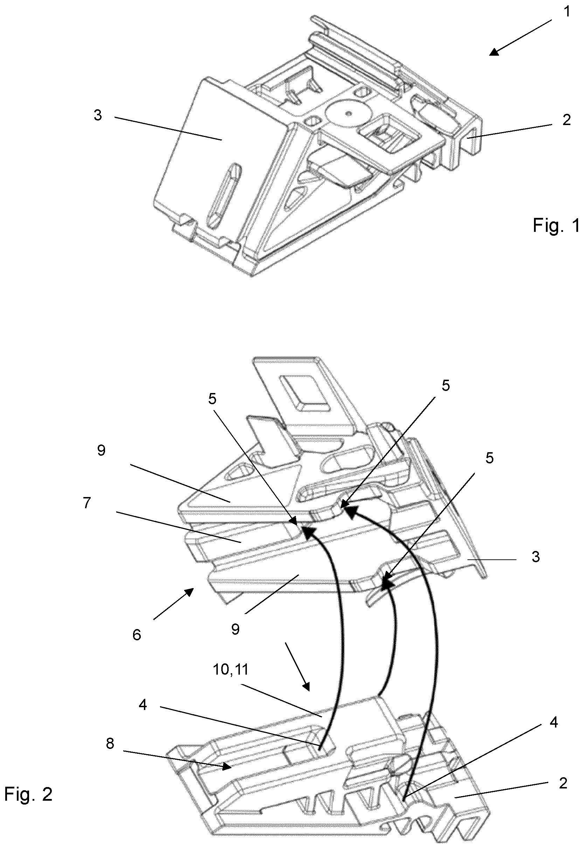

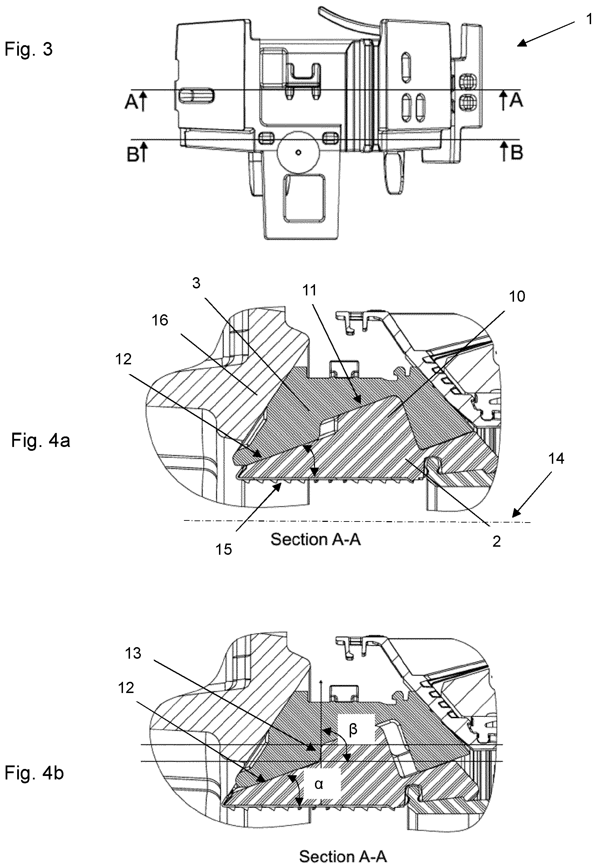

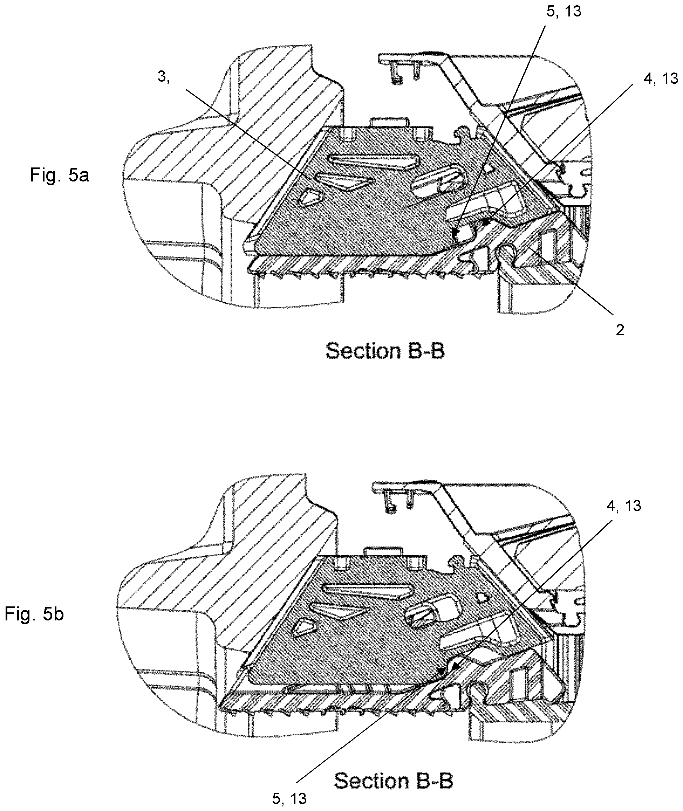

Fig. 1 shows a three-dimensional view of a pressure element 1 as it is installed in coupling devices for applying a clamping force to a pipe. Said pressure element 1 is configured to be used as one of a series of correspondingly embodied pressure elements 1, which are connected side by side to form a clamping ring (not shown). All pressure elements 1 are designed in the same way. Each of the pressure elements 1 contains a first pressure element segment 2, which is arranged closer respectively proximally to the pipe or the longitudinal axis 14, and a second pressure element segment 3, which is arranged further away respectively distally from the pipe or the longitudinal axis 14. The pressure elements 1 are arranged in a ring around the longitudinal axis 14 and form a closed clamping ring (not shown). The two pressure segments 2, 3 can move in relation to each other parallel to the longitudinal axis 14 up to an extreme position formed by stops 4, 5. For this purpose, the first pressure element segment 2 has a stop 4 that corresponds to a counter-stop 5 on the second pressure element segment 3. All pressure elements 1 are designed in the same way. It is advantageous if a stop is arranged in the center of the pressure element 1. Preferably, the second pressure element segment 3 has a tongue 7 which is arranged in the cavity 6 on the underside of the second pressure element segment 3. The tongue 7 extends parallel to the longitudinal axis 14 and is arranged in the center of the second pressure element segment 3. The surface 13 of the counter stop 5 is arranged on the inward-facing end of the tongue 7. This corresponds to the surface 13 of the stop 4 on the first pressure element segment 2, which can be clearly seen in Fig. 2. It is advantageous if the side elements 9 arranged to the side of the cavity 6 also have counter stops 5 on their end faces, which correspond to the stops 4 on the upper side of the first pressure element segment 2. The tongue 7 is guided in a recess 8 arranged on the first pressure element segment 2. The front wall of the recess 8 forms the surface 13 of the stop 4 which corresponds to the counter stop 5 on the tongue 7. The recess is located on the wedge 10 that extends along the upper side of the first pressure element segment 2. The wedge 10 has a slanted top 11 and the base of recess 12 and tongue 7 also have the same slant, which means that the two pressure element segments 2, 3 can be moved towards each other. Fig. 3 shows a pressure element 1 according to the invention with two sections A-A and B-B running through it. Figs. 4a and 4b show the section that runs through the center of the tongue 7 parallel to the longitudinal axis 14. The stop 4 and counter-stop 5 on the tongue 7 and the recess 8 are clearly recognizable. Fig. 4a shows the normal position, in which it can be seen that the stop 4 and the counter-stop 5 are not in contact with each other. In the normal position, the surface of the stop 4 and the counter stop 5 are not in contact or do not lie against each other. Fig. 4b shows the pressure element 1 in the extreme position, i.e. when a force acts on the pressure element 1 that causes the pipe to be pulled out of the coupling. It can be clearly seen that the two surfaces 13 are in contact with each other, which means that it is no longer possible to move the pressure element segments 2,3 towards each other and the pipe is stopped as a result. The fact that the stop 4 and the counter-stop 5 have a wide contact surface and are relatively flat means that high forces can be withstood without the stop 4 or counter-stop 5 failing. Figs. 5a and 5b show the section through the cutting path B-B, which runs through the center of a side element 9. The stop 4 arranged on the first pressure element segment 2 and the counter stop 5 formed by an area on the end face of the side element 9 are clearly visible. Fig. 5a shows the normal position and 5b shows the extreme position in which the stop 4 and counter-stop 5 are in contact with each other. It is advantageous if the pressure element segments 1 have several stops 4 and counter-stops 5 so that the force acting on the segments 2, 3 is distributed, but there can also be only one stable stop 4 and counter-stop 5 arranged on the segments 2, 3. It has also been shown to be advantageous that the angle β between the surface 13 of the stop 4 and counter-stop 5 on the tongue 7 and the recess 8 and the gripper teeth 15 is greater than the angle α between the gripper teeth 15 and the slanted top 11 surface of the wedge 10 or tongue 7, thereby forming a clear and stable boundary.

### Reference numbers

- 1: Pressure element
- 2: First pressure element segment
- 3: Second pressure element segment
- 4: Stop
- 5: Counter stop
- 6: Cavity
- 7: Tongue
- 8: Recess
- 9: Side element
- 10: Wedge
- 11: Top wedge
- 12: Base recess
- 13: Surface stop/counter stop
- 14: Longitudinal axis
- 15: Gripper teeth
- 16: Pressure ring

## Claims

1. Pressure element (1) for use in a coupling device for exerting a clamping force on a pipe, wherein the said pressure element (1) is configured to be used as one of a series of correspondingly embodied pressure elements (1), wherein said pressure element (1) as well as each pressure element (1) of said series comprises a first pressure element segment (2) and a second pressure element segment (3) and wherein in use the first pressure element segment (2) is arranged for being placed proximally and the second pressure element segment (3) is arranged for being placed distally with respect the longitudinal axis (14) of the pipe **characterized in that** the first pressure element segment (2) of said pressure element (1) as well as of each first pressure element segment (2) is provided with at least on stop (4) and the second pressure element segment (3) of said pressure element (1) as well as of each second pressure element segment (3) is provided with at least one cooperating counter stop (5) for limiting an extreme position of the first pressure element segment (2) and second pressure element segment (3) with respect to each other, wherein the stop (4) and the counter stop (5) of the first and second pressure segment (2, 3) of the same pressure element (1) co-operate with each other.

2. Pressure element (1) according to claim 1, **characterized in that** the fist pressure element segment (2) and the second pressure element segment (3) are arranged to be displaceable relative to one another parallel to the longitudinal axis (14) between a normal position and an extreme position.

3. Pressure element (1) according to one of the claims 1 or 2, **characterized in that** the second pressure element segment (3) has a cavity (6) on the underside in which a tongue (7) extends, which serves as a guide parallel to the longitudinal axis (14) for the mutual displacement of the first and the second pressure element segment (2, 3).

4. Pressure element (1) according to claims 3, **characterized in that**, the first pressure element segment (2) has a recess (8) on the upper side in which the tongue (7) of the second pressure element segment (3) can be moved.

5. Pressure element (1) according to claim 3, **characterized in that**, a stop (4) and the counter stop (5) are arranged at the front of the tongue (7) and the recess (8) and are in the extreme position against each other.

6. Pressure element (1) according to claims 3, **characterized in that** two parallel side elements (9) are arranged on the side of the cavity (6) on the underside of the second pressure element segment (3).

7. Pressure element (1) according to claims 6, **characterized in that** a wedge (10) is arranged at the top of the first pressure element segment (2) and is guided through the two side elements (9) of the second pressure element segment (3).

8. Pressure element (1) according to claims 6, **characterized in that** a stop (4) is arranged on the two side elements (9) and co-operates with a counter stop (5) arranged on the top of the first pressure element segment (2).

9. Pressure element (1) according to claim 7, **characterized in that** the top of the wedge (10) and the base (12) of the recess (8) are inclined at an angle (α) relative to the longitudinal axis (14), that the top (11) of the wedge (10) and the base (12) of the recess (8) are parallel.

10. Pressure element (1) according to claim 4, **characterized in that** the surface (13) of the stop (4) and counter-stop (5) of the tongue (7) and the recess (8) run at an angle (β) to the longitudinal axis (14).

11. Pressure element (1) according to claim 10, **characterized in that** the angle (β) of the surface (13) of the stop (4) with respect to the gripper teeth (15) or the longitudinal axis (14) surface is larger than the angle (α) of the slanting surfaces of the wedge (10) with respect to the gripper teeth (15) surface or the longitudinal axis (14).

12. Pressure element (1) according to claim 3, **characterized in that** the fist and second pressure element segments (2, 3) are one-piece plastic parts, preferably injection-molded plastic parts.
